# EUROPEAN PATENT APPLICATION

(11) **EP 4 343 907 A1**
(43) Date of publication of application: **27.03.2024**
(21) Application number: 23190096.0
(22) Date of filing: 07.08.2023
(51) Int. Cl.: H01M 10/04, H01M 10/0587, H01M 50/107, H01M 50/152, H01M 50/167, H01M 50/184, H01M 50/186, H01M 50/342, H01M 50/528, H01M 50/545, H01M 50/547, H01M 50/548

(54) **RECHARGEABLE BATTERY**

(30) Priority: 21.09.2022 KR 20220119492
(71) Applicant: Samsung SDI Co., Ltd., Yongin-si, Gyeonggi-do 17084 (KR)
(72) Inventor: KO, Sunggwi, 17084 Yongin-si (KR); AHN, Jeongchull, 17084 Yongin-si (KR); PARK, Gungue, 17084 Yongin-si (KR)
(74) Representative: Marks & Clerk LLP

(57) **Abstract**

The rechargeable battery according to an exemplary embodiment includes: an electrode assembly formed by winding a first electrode (positive electrode), a separator, and a second electrode (negative electrode); a case containing the electrode assembly; an electrode terminal provided in an insulated state in a first opening on one side of the case; a first current collector plate connecting the first electrode to the electrode terminal; a bent plate sealing a second opening on the other side of the case; a second current collector plate connecting the second electrode to a beading portion of the case inside the bent plate; and a gasket interposed between the second current collector plate and the bent plate and between the bent plate and the case to provide a sealing function by virtue of a crimping portion connected to the beading portion.

## Description

### BACKGROUND OF THE INVENTION

### (a) Field of the Invention

The present disclosure relates to a rechargeable battery. More particularly, the present disclosure relates to a rechargeable battery having a gasket between a current collector plate and a case.

### (b) Description of the Related Art

In accordance with the demand and the development of technology for mobile devices, the demand for rechargeable batteries as energy sources is increasing. For example, a cylindrical rechargeable battery includes an electrode assembly having charging and discharging functions, a case containing the electrode assembly, and a cap assembly electrically connected to the electrode assembly to seal an opening of the case.

As an example, the electrode assembly is formed by arranging a positive electrode and a negative electrode on opposite sides of a separator, respectively, and winding the positive electrode, the separator, and the negative electrode in a jelly roll form. In the electrode assembly, one electrode is connected to the cap assembly through a current collector plate, and the other electrode is connected to the case through a lead tab.

The cap assembly includes a current interrupt device (CID), and in this case, the opening of the case is sealed by virtue of a beading portion and a crimping portion for interposing a gasket between the current interrupt device and the case. At this time, the gasket is compressed by the beading portion and the crimping portion, which may cause an inner side end of the gasket to interfere with the current collector plate. In this case, the force of the gasket for sealing the opening may deteriorate.

### SUMMARY OF THE INVENTION

The present disclosure attempts to provide a rechargeable battery capable of preventing interference between a gasket and a current collector plate while securing a force of the gasket for sealing an opening of a case.

An embodiment of the present disclosure provides a rechargeable battery including: an electrode assembly formed by winding a first electrode (positive electrode), a separator, and a second electrode (negative electrode); a case containing the electrode assembly; an electrode terminal provided in an insulated state in a first opening on one side of the case; a first current collector plate connecting the first electrode to the electrode terminal; a bent plate sealing a second opening on the other side of the case; a second current collector plate connecting the second electrode to a beading portion of the case inside the bent plate; and a gasket interposed between the second current collector plate and the bent plate and between the bent plate and the case to provide a sealing function by virtue of a crimping portion connected to the beading portion.

The second current collector plate may include a wing portion welded to the beading portion, and the gasket may have an escape groove accommodating the wing portion.

The beading portion may have a flat portion formed in a horizontal direction on an upper side of a curved portion that is inwardly convex, and the wing portion may be welded to the flat portion.

The gasket may further include a compression portion contacting the flat portion outside the escape groove in a radial direction to provide a compression-airtight function.

The escape groove may be formed at a right angle on a side adjoining the compression portion, and may be formed at an obtuse angle on an inner side thereof in the radial direction.

The gasket may have a through hole inside the escape groove in a radial direction, and the through hole may connect an upper surface and a lower surface of the gasket to each other at a right angle.

The gasket may further include a convex portion convexly formed on an inner side thereof to further extend the through hole inward in a through direction.

A notch may be formed in an inner surface of the bent plate.

At least some of the above and other features of the invention are set out in the claims.

According to an embodiment of the present disclosure, since the gasket interposed between the second current collector plate and the bent plate and between the bent plate and the case provides a sealing function by virtue of the beading portion and the crimping portion, it is possible to secure a force of the gasket for sealing the opening of the case, and it is also possible to prevent interference between the gasket and the second current collector plate.

### BRIEF DESCRIPTION OF THE DRAWINGS

FIG. 1 is a longitudinal cross-sectional view of a rechargeable battery according to an embodiment of the present disclosure.
FIG. 2 is a cross-sectional view of FIG. 1 in a state before the bent plate is coupled to the second opening of the case by interposing the gasket.
FIG. 3 is a perspective view of a second current collector plate applied to FIG. 1.
FIG. 4 is a cross-sectional view of the gasket applied in FIG. 2.
FIG. 5 is a cross-sectional view of a state in which the bent plate is coupled to the second opening of the case by interposing the gasket in the state of FIG. 2.

### DETAILED DESCRIPTION OF THE EMBODIMENTS

Hereinafter, embodiments of the present disclosure will be described in detail with reference to the accompanying drawings so that they can be easily carried out by those having ordinary knowledge in the art to which the present disclosure pertains. However, the present disclosure may be embodied in many different forms, and is not limited to the embodiments described herein. In order to clearly describe the present disclosure in the drawings, parts irrelevant to the description are omitted, and the same or similar components are denoted by the same reference signs throughout the specification.

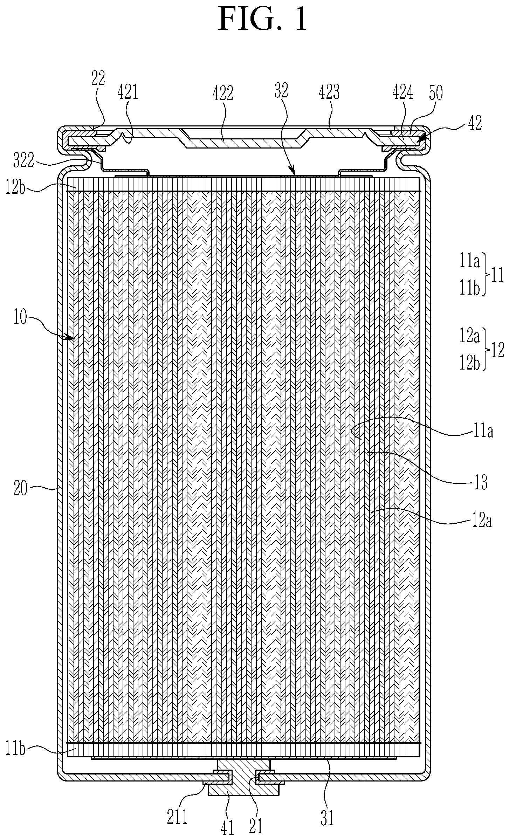

FIG. 1 is a longitudinal cross-sectional view of a rechargeable battery according to an embodiment of the present disclosure. Referring to FIG. 1, the rechargeable battery according to an embodiment includes an electrode assembly 10 having charging and discharging functions, a case 20 containing the electrode assembly 10, a first current collector plate 31 and a second current collector plate 32 connected to the electrode assembly 10, an electrode terminal 41, a bent plate 42, and a gasket 50.

The electrode assembly 10 is formed in a jelly roll state by winding a first electrode 11, a separator 13, and a second electrode 12. The first electrode 11 and the second electrode 12 include coated portions 11a and 12a that are regions where active materials are applied on both sides of substrates each formed of a thin metal plate, and uncoated portions 11b and 12b that are regions where the substrates are exposed because the active materials are not applied.

As an example, the first electrode 11 may form a positive electrode by coating a positive electrode active material on an aluminium (Al) substrate, and the second electrode 12 may form a negative electrode by coating a negative electrode active material on a copper (Cu) substrate. The uncoated portions 11b and 12b of the first and second electrodes 11 and 12 are provided at both ends (upper and lower ends in FIG. 1), respectively, of the electrode assembly 10 in a winding axial direction, together with the electrode terminal 41 and the case 20 having different polarities in the same direction. The bent plate 42 is located on the opposite side of the electrode terminal 41.

The case 20 is formed in a cylindrical shape to contain the electrode assembly 10, and the electrode terminal 41 and the bent plate 42 are provided at both ends of the case 20 in an axial direction through the uncoated portions 11b and 12b, respectively. The electrode terminal 41 is connected to the first electrode 11 through the first current collector plate 31, and the case 20 is connected to the second electrode 12 through the second current collector plate 32. In this case, the bent plate 42 is electrically disconnected from the second current collector plate 32 and the case 20 and has no polarity.

The electrode terminal 41 inserted into the case 20 from the outside and connected to the first electrode 11 of the electrode assembly 10 is provided on one side of the case 20. To this end, the case 20 has a first opening 21 partially opened on one side thereof. The electrode terminal 41 is provided in an electrically insulated state from the case 20 while forming an airtight structure with respect to an electrolyte through a sealing member 211 interposed in the first opening 21.

In this case, the first current collector plate 31 is electrically connected to the uncoated portion 11b of the first electrode 11, and electrically and mechanically connected to the electrode terminal 41. The first current collector plate 31 is electrically connected to the electrode terminal 41 while having a structure for reducing resistance by contacting most of the uncoated portion 11b of the first electrode 11.

As an example, the electrode terminal 41 may be provided in the first opening 21 of the case 20 in a rivet structure while one end of the electrode terminal 41 is connected to the first current collector plate 31 by welding. The electrode terminal 41 may protrude from an outer surface of the case 20 around the first opening 21 for use as a positive electrode terminal. In this case, the first current collector plate 31 is a positive current collector plate.

Also, the case 20 has a second opening 22 completely opened on to the other side thereof to insert the electrode assembly 10. The bent plate 42 is electrically disconnected from the case 20 while sealing the second opening 22 after the electrode assembly 10 is inserted into the case 20.

In this case, the second current collector plate 32 is electrically connected to the uncoated portion 12b of the second electrode 12 and electrically connected to the case 20. The second current collector plate 32 is connected to the case 20 while having a structure for reducing resistance by contacting most of the uncoated portion 12b of the second electrode 12.

The bent plate 42 is electrically disconnected from the second current collector plate 32, and provided in the second opening 22 of the case 20 in a crimping process. Since the second current collector plate 32 is connected to the case 20, the case 20 may be used as a negative electrode terminal. At this time, the second current collector plate 32 is a negative current collector plate.

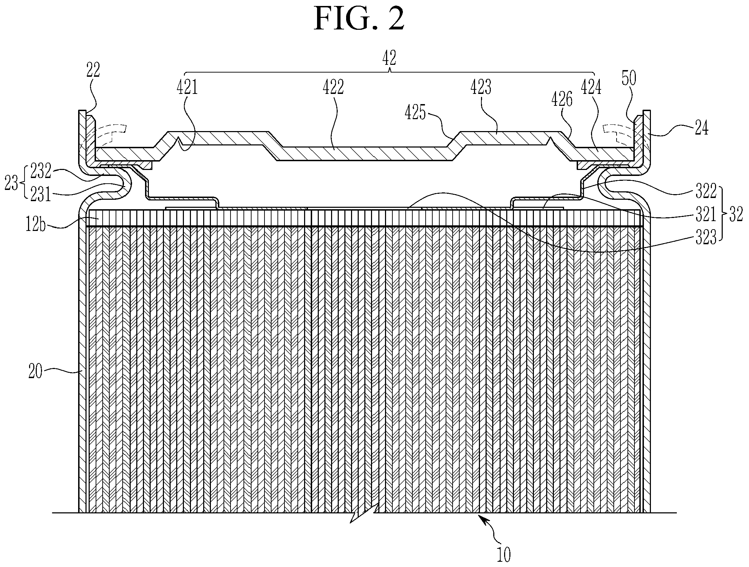

FIG. 2 is a cross-sectional view of FIG. 1 in a state before the bent plate is coupled to the second opening of the case by interposing the gasket. Referring to FIGS. 1 and 2, the second current collector plate 32 connects the second electrode 12 to a beading portion 23 of the case 20.

The beading portion 23 is formed adjacent to the second opening 22 of the case 20 through a beading process, and a crimping portion 24 connected to the beading portion 23 is formed through a crimping process. That is, the case 20 includes a beading portion 23 and a crimping portion 24.

The beading portion 23 is formed by depressing the case 20 toward the center thereof in a radial direction on the upper side of the case 20 in a state where the electrode assembly 10 is accommodated in the case 20, such that the electrode assembly 10 is prevented from being moved upward or downward. The crimping portion 24 is connected to the beading portion 23 while protruding relative to the beading portion 23 in the radial direction.

The gasket 50 is used in the crimping process. Before the crimping process, the gasket 50 is interposed between the second current collector plate 32 and the bent plate 42 and between the bent plate 42 and the case 20 to provide a sealing function by virtue of the beading portion 23 and the crimping portion 24 connected thereto. In addition, the gasket 50 forms an airtight structure with respect to the electrolyte between the second current collector plate 32 and the second opening 22 of the case 20.

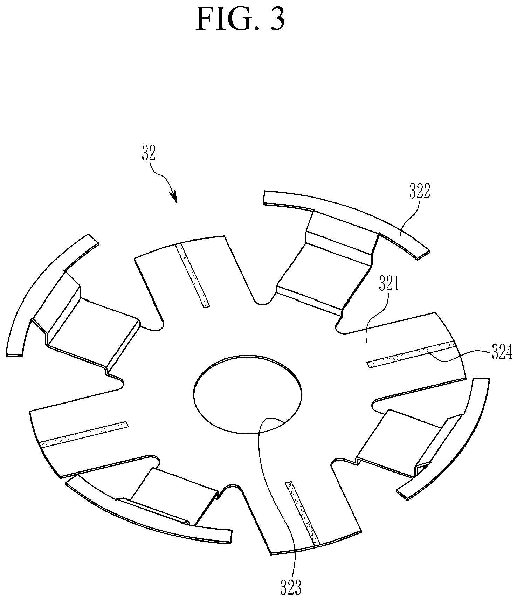

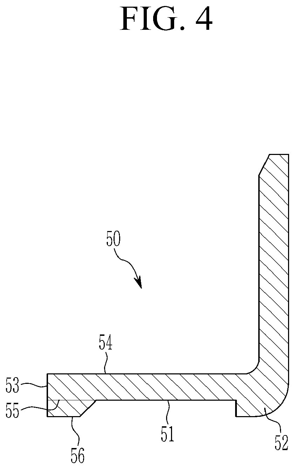

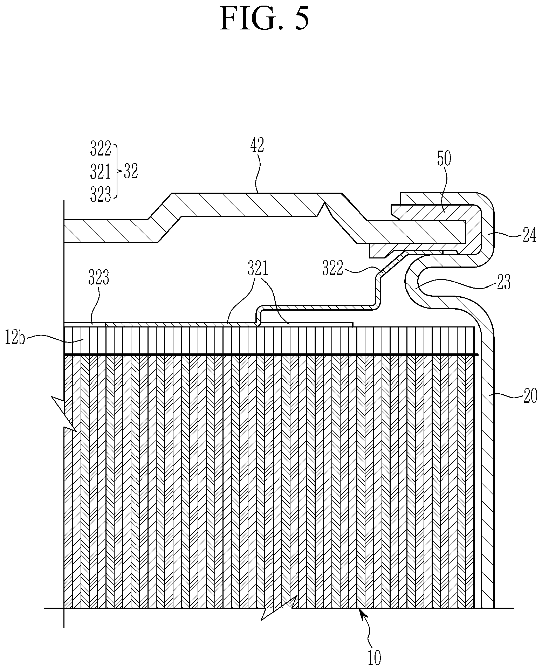

FIG. 3 is a perspective view of the second current collector plate applied to FIG. 1, FIG. 4 is a cross-sectional view of the gasket applied in FIG. 2, and FIG. 5 is a cross-sectional view of a state in which the bent plate is coupled to the second opening of the case by interposing the gasket in the state of FIG. 2.

Referring to FIGS. 3 to 5, the second current collector plate 32 includes a bottom portion 321 welded to the uncoated portion 12b of the second electrode 12, and a wing portion 322 formed adjacent to the bottom portion 321 and welded to the beading portion 23. The second current collector plate 32 is formed by cutting and bending a circular plate, and includes a plurality of bottom portions 321 and a plurality of wing portions 322 alternately disposed along the circumferential direction. During welding, a welding line 324 is formed in the radial direction on the bottom portion 321. In the wing portion 322, axial-direction (upward) bends and outward radial-direction bends may be repeatedly formed.

Therefore, the bottom portions 321 and the uncoated portion 12b are evenly connected to each other along the circumferential direction in the area of the uncoated portion 12b, and the wing portions 322 and the beading portion 23 are evenly connected to each other along the circumferential direction in the area of the beading portion 23. This enables a uniform current flow from the second electrode 12 along the circumferential direction in the entire area of the beading portion 23 of the case 20.

In addition, the second current collecting plate 32 has a through hole 323 in the center thereof. As a result, it is possible to reduce deformation caused by welding between the bottom portions 321 and the uncoated portion 12b, and it is also possible to absorb and alleviate vibration and shock that may be transmitted between the wing portions 322 and the bottom portions 321. The through hole 323 may have a size within a range capable of absorbing vibration and shock without increasing current resistance between the wing portions 322 and the bottom portions 321.

The beading portion 23 includes a flat portion 232 formed parallel to a plane formed by the cross section of the uncoated portion 12b on an upper side of a curved portion 231 that is inwardly convex. The wing portions 322 of the second current collector plate 32 are welded to the flat portion 232. As a result, the second current collector plate 32 can be stably brought into contact with and welded to the beading portion 23 of the case 20 to realize a further uniform current flow.

In addition, the wing portion 322 is wider along the circumferential direction on a side connected to the flat portion 232 than on a side connected to the bottom portion 321. As a result, it is possible to further increase a contact area and a welding area between the wing portion 322 and the flat portion 232, thereby preventing an increase in resistance at the welded portion.

In this case, the gasket 50 has an escape groove 51 accommodating the wing portion 322. The escape groove 51 increases the stability of the gasket 50 by reducing the deformation of the gasket 50 between the wing portion 322 and the bent plate 42 during the crimping process.

The gasket 50 further includes a compression portion 52 contacting the flat portion 232 outside the escape groove 51 in the radial direction to provide a compression-airtight function. Despite the escape groove 51, the compression portion 52 realizes a sufficient airtight function between the flat portion 232 and the bent plate 42.

The escape groove 51 is formed at a right angle on a side adjoining the compression portion 52 to stably accommodate the end of the wing portion 322 and prevent misalignment between the wing portion 322 and the gasket 50. The escape groove 51 may be formed at an obtuse angle on the inner side in the radial direction to induce coupling of the bent structure of the wing portion 322 and to stably accommodate the bent structure of the wing portion 322. The wing portion 322 may be bent to correspond to the obtuse structure of the escape groove 51.

Referring to FIG. 4, the gasket 50 has a through hole 53 inside the escape groove 51 in the radial direction. A lateral side of the through hole 53 connects an upper surface 54 and a lower surface 55 of the gasket 50 to each other at a right angle. The gasket 50 further includes a convex portion 56 convexly formed on the inner side thereof to further extend the through hole 53 inward in the through direction. The convex portion 56 prevents the bent structure of the wing portion 322 from being pushed toward the bent plate 42.

The through hole 53 of the gasket 50 is formed to correspond to an outer portion 424 of the bent plate 42. As a result, it is possible to prevent the inner side of the gasket 50 compressed and deformed by the crimping process from interfering with the second current collector plate 32.

A notch 421 is formed in the inner surface of the bent plate 42. If an event occurs in the rechargeable battery, the notch 421 is cut to discharge internal pressure to prevent secondary explosion. The bent plate 42 is formed of a circular plate, and includes a central portion 422, a convex portion 423, and an outer portion 424.

The central portion 422 is formed to be concave toward the electrode assembly 10, the convex portion 423 is formed to be convex away from the electrode assembly 10 outside the central portion 422 in the radial direction, and the outer portion 424 forms the same plane as the central portion 422 toward the electrode assembly 10 outside the convex portion 423 in the radial direction.

That is, an inner inclined surface 425 and an outer inclined surface 426 are formed at a portion where the central portion 422 and the convex portion 423 are connected to each other and at a portion where the convex portion 423 and the outer portion 424 are connected to each other. The inner inclined surface 425 and the outer inclined surface 426 increase the rigidity of the bent plate 42 against the internal pressure of the rechargeable battery.

The notch 421 is formed in an inner surface between the convex portion 423 and the outer inclined surface 426 to be easily cut by intensive internal pressure applied thereto when an event occurs. The notch 421 may be formed throughout the entire area of the bent plate 42 along the circumferential direction, or a plurality of notches 421 may be formed to be spaced apart from one another at predetermined intervals.

Although the preferred embodiments of the present disclosure have been described above, the present disclosure is not limited thereto, and various modifications may be made within the scope of the claims, the specification, and the accompanying drawings, which also fall within the scope of the present disclosure.

### <Description of symbols>

| | | | |
|---|---|---|---|
| 10: | electrode assembly | 11: | first electrode |
| 11a, 12a: | coated portion | 11b,12b: | uncoated portion |
| 12: | second electrode | 13: | separator |
| 20: | case | 21: | first opening |
| 22: | second opening | 23: | beading portion |
| 24: | crimping portion | 31: | first current collector plate |
| 32: | second current collector plate | 41: | electrode terminal |
| 42: | bent plate | 50: | gasket |
| 51: | escape groove | 52: | compression portion |
| 53: | through hole | 54: | upper surface |
| 55: | lower surface | 56: | convex portion |
| 211: | sealing member | 231: | curved portion |
| 232: | flat portion | | |
| 321: | bottom portion | 322: | wing portion |
| 323: | through hole | 324: | welding line |
| 421: | notch | 422: | central portion |
| 423: | convex portion | 424: | outer portion |
| 425: | inner inclined surface | 426: | outer inclined surface |

## Claims

1. A rechargeable battery comprising:
an electrode assembly formed by winding a first electrode, a separator, and a second electrode;
a case containing the electrode assembly;
an electrode terminal provided in an insulated state in a first opening on one side of the case;
a first current collector plate connecting the first electrode to the electrode terminal;
a bent plate sealing a second opening on the other side of the case;
a second current collector plate connecting the second electrode to a beading portion of the case inside the bent plate; and
a gasket interposed between the second current collector plate and the bent plate and between the bent plate and the case to provide a sealing function by virtue of a crimping portion connected to the beading portion.

2. The rechargeable battery as claimed in claim 1, wherein
the second current collector plate includes a wing portion welded to the beading portion, and
the gasket has an escape groove accommodating the wing portion.

3. The rechargeable battery as claimed in claim 2, wherein
the beading portion has a flat portion formed in a horizontal direction on an upper side of a curved portion that is inwardly convex, and
the wing portion is welded to the flat portion.

4. The rechargeable battery as claimed in claim 3, wherein
the gasket further includes a compression portion contacting the flat portion outside the escape groove in a radial direction to provide a compression-airtight function.

5. The rechargeable battery as claimed in claim 4, wherein
the escape groove is formed at a right angle on a side adjoining the compression portion, and is formed at an obtuse angle on an inner side thereof in the radial direction.

6. The rechargeable battery as claimed in any one of claims 3 to 5, wherein
the gasket has a through hole inside the escape groove in a radial direction, and
the through hole connects an upper surface and a lower surface of the gasket to each other at a right angle.

7. The rechargeable battery as claimed in claim 6, wherein
the gasket further includes a convex portion convexly formed on an inner side thereof to further extend the through hole inward in a through direction.

8. The rechargeable battery as claimed in any one of claims 1 to 7, wherein
a notch is formed in an inner surface of the bent plate.
